(19) Europäisches Patentamt
European Patent Office
Office européen des brevets

(11) **EP 3 713 065 B1**

(12) **EUROPEAN PATENT SPECIFICATION**

(45) Date of publication and mention
of the grant of the patent:
**29.09.2021 Bulletin 2021/39**

(51) Int Cl.:
**H02M 3/335** *(2006.01)*

(21) Application number: **18879350.9**

(22) Date of filing: **24.10.2018**

(86) International application number:
**PCT/JP2018/039488**

(87) International publication number:
**WO 2019/097967 (23.05.2019 Gazette 2019/21)**

(54) **POWER SUPPLY DEVICE AND CONTROL DEVICE**

ENERGIEVERSORGUNGSVORRICHTUNG UND STEUERVORRICHTUNG

DISPOSITIF D'ALIMENTATION ÉLECTRIQUE ET DISPOSITIF DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.11.2017 JP 2017220774**

(43) Date of publication of application:
**23.09.2020 Bulletin 2020/39**

(73) Proprietor: **Omron Corporation
Kyoto-shi, Kyoto 600-8530 (JP)**

(72) Inventors:
• **ZHAO, Qian
Kyoto-shi
Kyoto 600-8530 (JP)**
• **HYODO, Takashi
Kyoto-shi
Kyoto 600-8530 (JP)**

(74) Representative: **Horn Kleimann Waitzhofer
Patentanwälte PartG mbB
Ganghoferstrasse 29a
80339 München (DE)**

(56) References cited:
WO-A1-2014/169821     JP-A- 2013 027 270
JP-A- 2013 251 974     JP-A- 2015 154 525
JP-A- 2016 019 322     US-A1- 2011 292 688
US-A1- 2014 160 805     US-A1- 2016 352 231

**Description**

TECHNICAL FIELD

The present invention relates to a power supply apparatus that includes an LC resonant converter and a control apparatus for controlling the LC resonant converter.

RELATED ART

DC/DC converters called LLC-type DC/DC converters, LLC resonant converters, and the like (hereinafter, referred to as "LLC converters"; see Non-patent Document 1) are known.

An LLC converter is a DC/DC converter provided with an LLC resonant circuit constituted by a leakage inductance and an excitation inductance of a transformer as well as a capacitor; a signal generation circuit (half-bridge circuit, etc.) that generates a square-waved voltage signal to be supplied to the LLC resonant circuit; and a rectifier circuit that rectifies the output of the transformer.

In such an LLC converter, feedback control is performed on a switching frequency using an output voltage and the like in order to reduce a change amount of an output voltage at the time of a load change (for example, see Patent Document 1). Since an LLC converter has a non-linear gain characteristic, conventional control that is performed on the LLC converter results in a relatively large change occurring in an output voltage at the time of a load change, depending on an operation state such as an input voltage, an output current, and an output voltage of the LLC converter.

In addition, similarly, conventional control that is performed on an LCC converter that has a non-linear gain characteristic also results in a relatively large change occurring in the output voltage at the time of a load change, depending on an operation state such as an input voltage, an output current, an output voltage, and the like of the LCC converter.

Furthermore, US 2016/0352231 A1 discloses a series-parallel resonant power converter comprising a primary-side start-up controller and a secondary-side controller, wherein the primary-side start-up controller sends power to the secondary-side controller when power (voltage) is first applied to the series-parallel resonant power converter. The start-up controller starts up the series-parallel resonant power converter using an open-loop start-up technique wherein the secondary-side closed-loop controller takes over control of the series-parallel resonant power converter once it becomes powered and activated. During light-load or no load conditions, the secondary-side controller sends an off resonance higher frequency or a standby code inhibit (disable) command to the start-up controller. When power needs to be sent to the secondary side of the transformer to charge a secondary side capacitor, the secondary-side controller may send an enable code command to the start-up controller where it is detect to allow the start-up controller to operate in a normal fashion with the secondary side controller.

US 2011/0292688 A1 discloses a resonant conversion system, in which a resonant converter receives an input voltage to generate an output voltage, and a buck converter provides the input voltage of the resonant converter, and controls the input voltage to perform an over-current protection process.

US 2014/0160805 A1 discloses an AC/ DC power converter that converts an AC input voltage into a DC output voltage. This AC/DC power converter includes an input rectifier stage which rectifies an AC input voltage into a first rectified voltage. The AC/DC power converter also includes a switching resonant stage which is directly coupled to the output of the input rectifier stage. The switching resonant stage converts the rectified voltage into a first high frequency AC voltage of a first amplitude. This AC/DC power converter additionally includes a transformer which is coupled to the output of the switching resonant stage and is configured to downconvert the first high frequency AC voltage into a second high frequency AC voltage of a second amplitude. Furthermore, the AC/DC power converter includes an output rectifier stage which is coupled to the output of the transformer, wherein the output rectifier stage rectifies the second high frequency AC voltage into a DC output voltage.

RELATED ART DOCUMENTS

PATENT DOCUMENTS

Patent Document 1: Japanese Patent No. JP-T-2003-510001

NON-PATENT DOCUMENTS

Katsuya Hirachi, "Circuit Configuration And Operation Principle of LLC-Type DC/DC Converter", [online], May 29, 2014, [retrieved on September 20, 2017], Internet <URL: http://hirachi.cocolog-nifty.com/kh/files/20140529-3.pdf>

## SUMMARY OF THE INVENTION

### PROBLEM TO BE SOLVED BY THE INVENTION

The present invention has been made in light of the above-described problem, and aims to provide a technique that makes it possible to suppress occurrence of a large change in an output voltage of an LC resonant converter such as an LLC converter or an LCC converter when the operation state of the LC resonant converter changes.

### MEANS FOR SOLVING THE PROBLEMS

The present invention relates to a control apparatus for controlling an LC resonant converter, as specified in claim 1. This control apparatus makes it possible to suppress occurrence of a large change in an output voltage of an LC resonant converter at the time of a load change, independently from an input voltage of the LC resonant converter.

Another aspect of the present invention is an LC resonant converter as specified in claim 2, which comprises the control apparatus of claim 1.

Accordingly, switching frequency/output voltage characteristics of an LC resonant converter such as an LLC converter or an LCC converter largely changes depending on an input voltage. Thus, there are cases where, if feedback control is performed on the switching frequency of the LC resonant converter based on an output voltage and change rates of the output voltage and an output current, an input voltage range in which a change amount of an output voltage increases at the time of a load change is generated. Note that, if the operation state of the LC resonant converter is the first state where a change of a predetermined amount or larger can occur in an output voltage as a result of feedback control being performed, the control unit of the power supply apparatus according to the one aspect of the present invention executes, in place of feedback control, "open-loop control for obtaining, from one or more pieces of information out of an input voltage and an output current of the LC resonant converter and the target voltage, a switching frequency at which an output voltage of the LC resonant converter reaches the target voltage, and driving the switching element in the signal generation circuit at the obtained switching frequency". Therefore, according to the power supply apparatus in this aspect of the present invention, even when a change, which results in occurrence of an output voltage change, occurs in the operation state of the LC resonant converter as a result of conventional control being performed, it is possible to suppress occurrence of a large change in an output voltage of the LC resonant converter.

Various units that have different specific configurations/functions can be adopted as the determination unit of the control unit of the above-described power supply apparatus. The determination unit may be, for example, a unit that "determines whether or not the operation state of the LC resonant converter is the first state, based on whether or not a change amount of a value indicative of an output current of the LC resonant converter per predetermined period of time exceeds a predetermined threshold value" or a unit that "determines whether or not the operation state of the LC resonant converter is the first state, based on a value indicative of an input voltage and a value indicative of an output current of the LC resonant converter". Moreover, the determination unit may also be a unit that "determines, based on information regarding the operation state of the LC resonant converter, whether or not the operation state of the LC resonant converter is a first state where an amount of a change that occurs in an output voltage when the feedback control is executed is larger than that when the open-loop control is executed".

The open-loop control that is executed by the drive control unit of the control unit of the above-described power supply apparatus may be control for searching for a switching frequency that corresponds to the current status, from correspondence relation information indicating a correspondence relation between a switching frequency at which an output voltage of the LC resonant converter reaches a target voltage and an input voltage, an output current, and the like of the LC resonant converter, and driving each of the switching elements in the generation circuit at the retrieved switching frequency.

In addition, if the LC resonant converter is an LLC converter, control for obtaining a switching frequency f based on the following equation, and driving the switching elements in the signal generation circuit at the obtained switching frequency f may be adopted as the open-loop control.

$$f = \cfrac{f_r}{\sqrt{\cfrac{2 + 2S - (SQ)^2}{2} - \sqrt{\left(\cfrac{V_i}{V_o} S\right)^2 - (1 + S)^2 + 2(SQ)^2 - (G \cdot (SQ))^2 + \left(\cfrac{2 + 2S - (SQ)^2}{2}\right)^2}}}$$

$$S = \frac{L_m}{L_r} \qquad Q = \frac{Z_r}{R_{AC}} \qquad Z_r = \sqrt{\frac{L_r}{C_r}} \qquad R_{AC} = \frac{8}{\pi^2} N^2 R_L$$

Here, Vi is an input voltage of the LLC converter, $V_o$ is the target voltage, $L_m$ and N are respectively an excitation inductance and a transformation ratio of a transformer in the LLC converter, $L_r$ is a resonant inductance in the resonant circuit, $C_r$ is a capacity of a resonant capacitor of the resonant circuit, $f_r$ is a resonant frequency of the resonant circuit, $R_L$ is a resistance of the load obtained based on an output current of the LLC converter and the target voltage, and G is a function of at least one physical property value selected from an input voltage and an output current of the LLC converter, values indicative thereof, and the target voltage, the function having been determined in advance as an approximate equation of a " $(f/f_r)^2$" value.

In addition, G may be a function of the input voltage $V_i$.

EFFECTS OF THE INVENTION

According to the present invention, it is possible to suppress occurrence of a large change in an output voltage of an LC resonant converter at the time of a change in the operation state of the LC resonant converter.

BRIEF DESCRIPTION OF THE DRAWINGS

FIG. 1       is a diagram illustrating a configuration example of a power supply apparatus according to one embodiment of the present invention.
FIG. 2A     is a diagram illustrating a configuration example of an LLC converter.
FIG. 2B     is a diagram illustrating a configuration example of an LLC converter.
FIG. 2C     is a diagram illustrating a configuration example of an LLC converter.
FIG. 3       is a diagram illustrating switching frequency/output voltage characteristics of an LLC converter.
FIG. 4A     is a diagram illustrating an output change amount when an input voltage is 312 V, and a load change occurs in an LLC converter on which conventional feedback control is being performed.
FIG. 4B     is a diagram illustrating an output change amount when an input voltage is 180 V, and the same load change as that shown in FIG. 3A occurs in an LLC converter on which conventional feedback control is being performed.
FIG. 5       is functional block diagram of a control unit of a power supply apparatus according to an embodiment of the present invention.
FIG. 6A     is a diagram illustrating an output change amount when an input voltage is 312 V, and a load change occurs in an LLC converter that is being controlled by a control unit.
FIG. 6B     is a diagram illustrating an output change amount when an input voltage is 180 V, and the same load change as that shown in FIG. 5A occurs in an LLC converter that is being controlled by a control unit.
FIG. 7       is a diagram illustrating a modified example of a control unit.
FIG. 8       is a diagram illustrating a gain characteristic of an LCC converter.
FIG. 9A     is a diagram illustrating a configuration example of an LCC converter.
FIG. 9B     is a diagram illustrating a configuration example of an LCC converter.

EMBODIMENTS OF THE INVENTION

Application Example

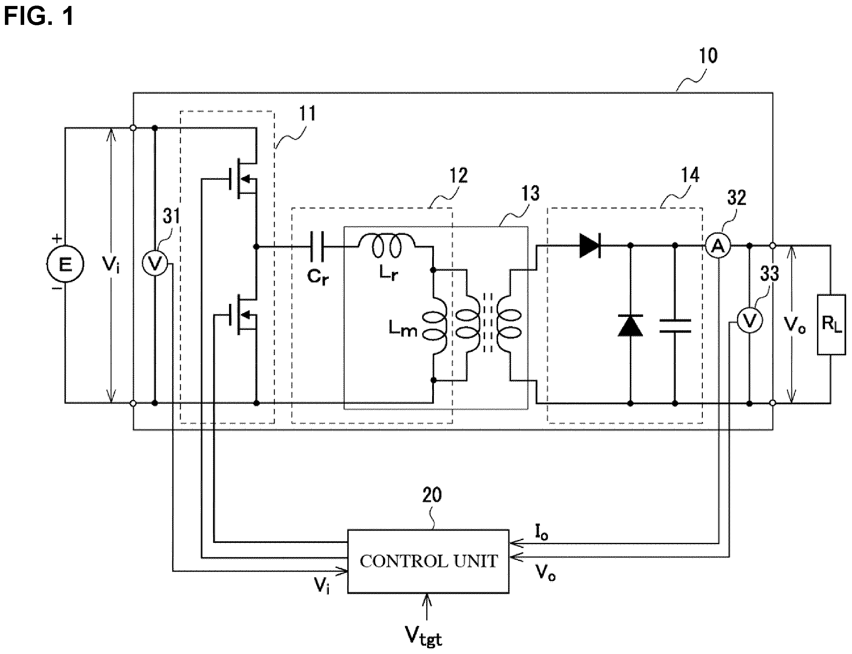

An application example of the present invention will be described below. The present invention is applied to, for example, a power supply apparatus that includes an LLC converter 10 and a control unit 20 as shown in FIG. 1. Note that the LLC converter 10 is an example of an LC resonant converter.

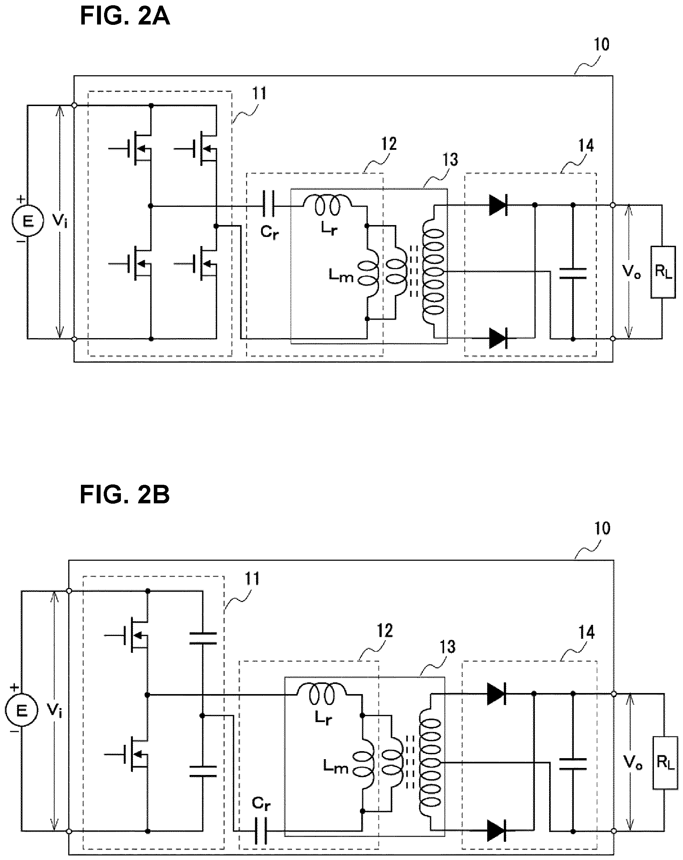

The LLC converter 10 is a DC/DC converter provided with a signal generation circuit 11, an LLC resonant circuit 12, a transformer 13, and a rectifier circuit 14. The LLC resonant circuit 12 of the LLC converter 10 is a resonant circuit constituted by an excitation inductance $L_m$ and a resonant inductance $L_r$ of the transformer 13 and a resonant capacitor $C_r$. The resonant inductance $L_r$ may be a leakage inductance of the transformer 13, an inductance of an inductor provided separately from the transformer 13, or a combined inductance of the leakage inductance of the transformer 13 and the inductance of the inductor. In addition, the resonant capacitor $C_r$ may be connected to either terminal on the primary side of the transformer 13 (see FIG. 2B). Hereinafter, the capacity of the resonant capacitor $C_r$ is also referred to as $C_r$.

The signal generation circuit 11 is a circuit for generating a square-waved voltage signal based on the input voltage Vi (output voltage of a DC power source E) and supplying the voltage signal to the LLC resonant circuit 12, the circuit including a plurality of switching elements. Here, the "square-waved voltage signal" refers to a voltage signal whose duty ratio is 50%, or a voltage signal that is different in terms of dead time and shape (temporal change pattern).

FIG. 1 shows that the signal generation circuit 11 is constituted by two switching elements, but it suffices for the signal generation circuit 11 to be a circuit that can generate a square-waved voltage signal. Therefore, the signal generation circuit 11 may also be a circuit in which four switching elements are connected through full bridge connection as shown in FIG. 2A, or may also be a circuit constituted by two switching elements and two capacitors as shown in FIG. 2B. The signal generation circuit 11 may also be a circuit that has a circuit configuration different from those shown in drawings. In addition, each switching element in the signal generation circuit 11 may be a semiconductor switching element other than a MOSFET (IGBT, etc.)

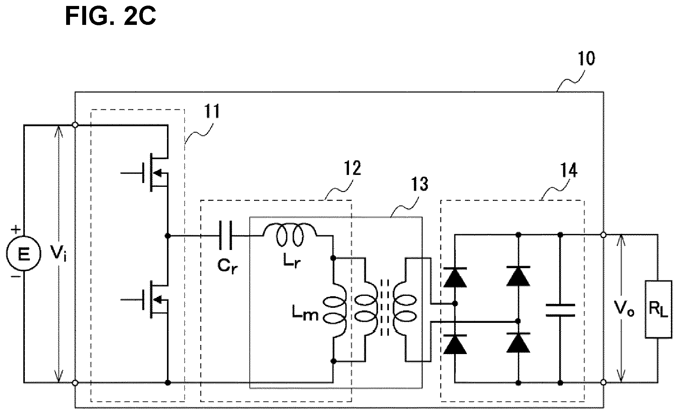

The rectifier circuit 14 (FIG. 1) is a circuit that rectifies the output of the transformer 13, and supplies the rectified output to a load $R_L$. It suffices for this rectifier circuit 14 to be a circuit that can convert an alternate current into a direct current. Therefore, the rectifier circuit 14 may also be a circuit in which diodes are connected through a full bridge connection as shown in FIG. 2C. In addition, the rectifier circuit 14 may also be a circuit such as one of those shown in Figs. 2A and 2B, in other words, a circuit that uses the tap output of a transformer. Furthermore, the rectifier circuit 14 may also be a synchronous rectifier circuit (rectifier circuit provided with several switching elements).

An output voltage $V_o$ of the LLC converter 10 that has the above-described circuit configuration takes a value that corresponds to the switching frequency of the LLC converter 10 (switching elements in the signal generation circuit 11). Note that the output voltage $V_o$ also changes depending on a load current (=output current) $I_o$, and thus, if feedback control is performed on the switching frequency of the LLC converter 10 using only the output voltage $V_o$, a large change can occur in the output voltage $V_o$ when the load current changes. Thus, conventionally, feedback control has been performed on the switching frequency of the LLC converter 10 using the output voltage $V_o$ and a change rate of a current I such as the output current. Specifically, feedback control has been performed on the switching frequency of the LLC converter 10 such that the deviation between "$V_o + k \cdot dI/dt$" (where k is a proportionality coefficient) and a target voltage reaches "0".

When the LLC converter 10 is used in an environment where the input voltage Vi hardly changes, it is possible to prevent a large output voltage change from occurring at the time of a load change by performing feedback control on the switching frequency as described above.

Note that a correction amount of the switching frequency required for maintaining the output voltage $V_o$ at the time of a load change differs depending on the input voltage Vi.

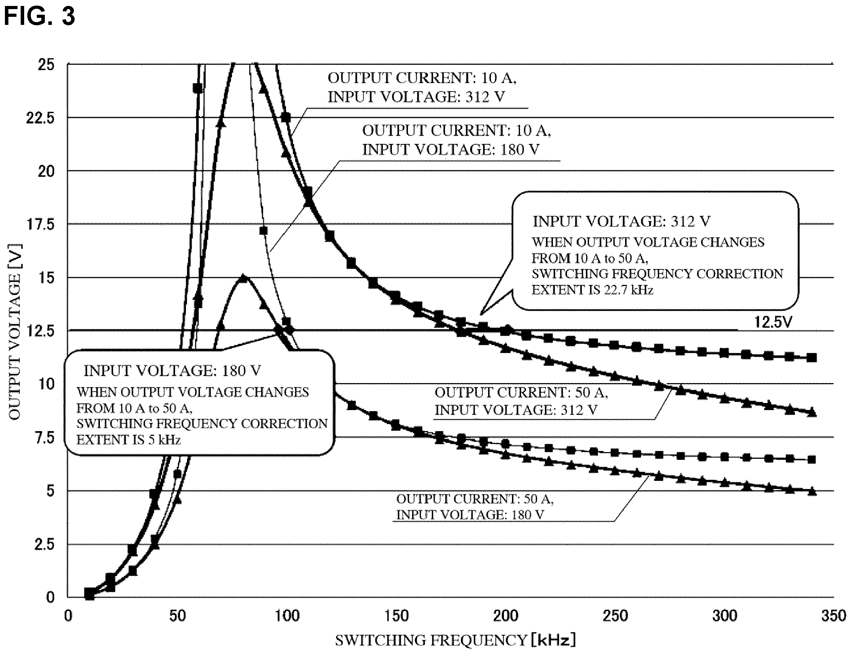

To be specific, FIG. 3 shows switching frequency/output voltage characteristics (hereinafter, referred to as F-V characteristics) under various operation conditions of the LLC converter 10 of a certain specification. As clearly indicated by the F-V characteristics in FIG. 3, in this LLC converter 10, when the input voltage Vi is 180 V, and the load current (output current of the LLC converter 10) $I_o$ changes from 10 A to 50 A, the output voltage $V_o$ can be maintained at 12.5 V by correcting (changing) the switching frequency by 5 kHz. Note that, when the input voltage Vi is 312 V, and the load current $I_o$ changes from 10 A to 50 A, the switching frequency needs to be corrected more (22.7 kHz) to maintain the output voltage $V_o$ at 12.5 V.

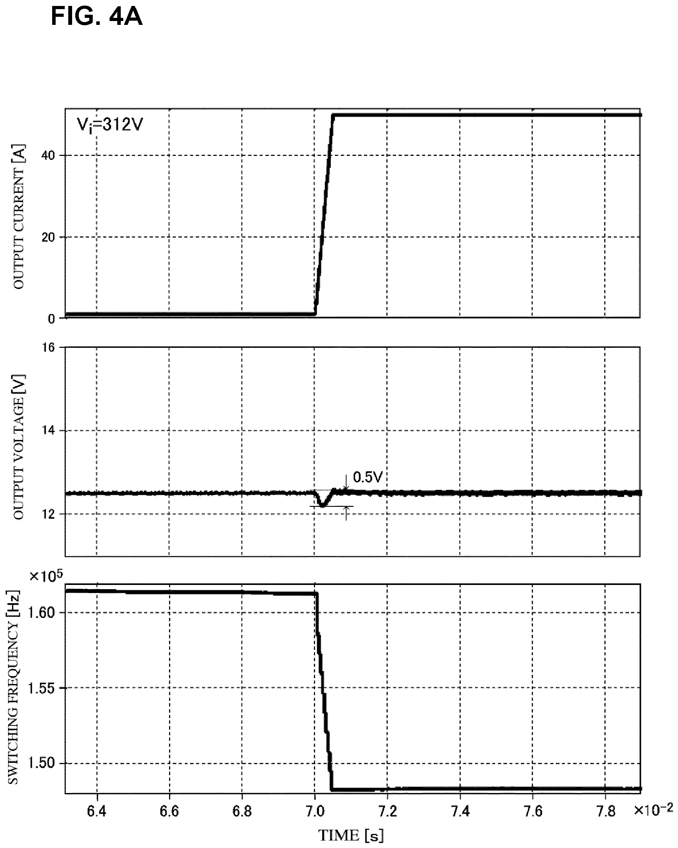

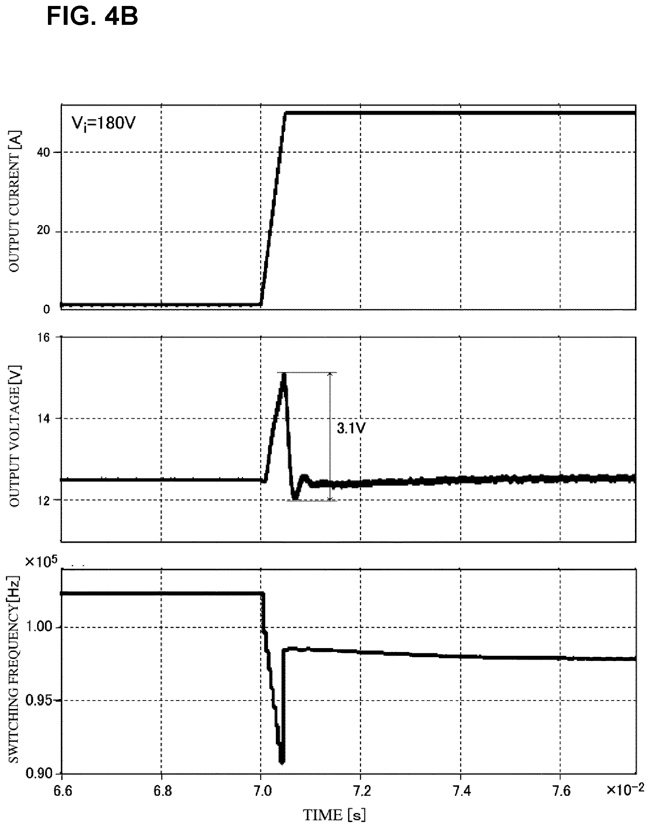

As described above, a correction amount of a switching frequency required for maintaining the output voltage $V_o$ at the time of a load change differs depending on the input voltage Vi. Thus, when feedback control is performed on the switching frequency of the LLC converter 10 using the output voltage $V_o$ and a change rate of the output current $I_o$, the phenomenon occurs that the amount of a change in the output voltage $V_o$ is different for the same load change (in FIGS. 4A and 4B, a load change of "the output current $I_o$ changing from 1 A to 50 A at the speed of 100 A/ms") as shown in FIGS. 4A and 4B.

In order to prevent a large output voltage change as shown in FIG. 4B from occurring at the time of a load change, the control unit 20 in the application example of the present invention (FIG. 1) is configured to perform the following processing and control.

Usually, the control unit 20 performs feedback control of a switching frequency, and, in the meantime, repeats determination processing for determining, based on information regarding the operation state of the LLC converter 10, whether or not the operation state of the LLC converter 10 is a first state where continuing feedback control of the switching frequency can result in a change of a predetermined amount or larger in an output voltage.

Note that feedback control of a switching frequency that is performed by the control unit 20 may also be based only on an output voltage. Note that an output voltage change amount at the time of a load change is smaller when feedback control that is based on the output voltage $V_o$ and a change rate of the output current $I_o$ is performed. Therefore, feedback control of a switching frequency that is performed by the control unit 20 is preferably based on the output voltage $V_o$ and a change rate of the output current $I_o$. In addition, it suffices for information regarding the operation state of the LLC converter 10 that is used for determination processing to be information based on which it is possible to determine whether or not the operation state of the LLC converter 10 is the above-described first state. Therefore, for example, an output current of the LLC converter 10 or an output current and an input voltage of the LLC converter 10 can be adopted as information regarding the operation state of the LLC converter 10.

If it is determined that the operation state of the LLC converter 10 is the first state, the control unit 20 executes, instead of feedback control, open-loop control for obtaining a switching frequency at which the output voltage $V_o$ reaches a target voltage $V_{tgt}$, based on the input voltage Vi and the output current $I_o$ of the LLC converter 10 and the target voltage $V_{tgt}$, and driving each switching element in the LLC converter 10 (the signal generation circuit 11) at the obtained switching frequency.

In open-loop control, it is difficult to accurately match the output voltage $V_o$ and the target voltage $V_{tgt}$. Note that, if open-loop control is performed, it is possible to reduce the amount of a change that occurs in the output voltage $V_o$, compared to that when feedback control that does not conform to the current status (feedback control that is not appropriate for the input voltage Vi and the like at that point of time) is performed. Therefore, according to the control unit 20 that operates as described above, it is possible to reduce an output voltage change amount when the operation state of the LLC converter 10 changes, compared to conventional control.

Note that open-loop control that is performed by the control unit 20 may also be control for searching for a switching frequency that corresponds to the current status, from correspondence relation information that indicates a correspondence relation with a switching frequency at which the output voltage $V_o$ of the LLC converter 10 reaches the target voltage $V_{tgt}$, and driving each switching element in the signal generation circuit at the retrieved switching frequency. It is inevitable for the size of such correspondence relation information to be large. Thus, open-loop control is preferably control for obtaining a switching frequency using mathematical expressions (to be described later in detail).

Embodiment

A power supply apparatus according to one embodiment of the present invention will be described below in detail with reference to the drawings.

FIG. 1 shows a schematic configuration of a power supply apparatus according to one embodiment of the present invention.

As illustrated, the power supply apparatus according to this embodiment includes the LLC converter 10 and the control unit 20.

The LLC converter 10 is a DC/DC converter provided with the signal generation circuit 11, the LLC resonant circuit 12, the transformer 13, and the rectifier circuit 14. A voltage sensor 31, a current sensor 32, and a voltage sensor 33 for respectively measuring the input voltage Vi, the output current $I_o$, and the output voltage $V_o$ of the LLC converter 10 are provided in the LLC converter 10. As described already, as long as the LLC converter 10 is a DC/DC converter provided with the LLC resonant circuit 12 constituted by the excitation inductance $L_m$ and the resonant inductance $L_r$ of the transformer 13 and the resonant capacitor $C_r$, the LLC converter 10 may also have a circuit configuration different from that shown in FIG. 1 (see FIG. 2A to 2C).

The control unit 20 is a unit that performs on/off control of the switching elements in the LLC converter 10 based on outputs of the sensors 31 to 33 (specifically, the input voltage $V_i$, the output current $I_o$, and the output voltage $V_o$) and the target voltage $V_{tgt}$. Note that the control unit 20 of the power supply apparatus according to this embodiment is a unit in which a microcontroller for controlling a DC/DC converter is a main constituent element, and the CPU in the microcontroller is programmed such that control to be described later can be executed. Note that the control unit 20 may also be a unit having another hardware configuration (for example, a unit in which a CPU, a ROM, a RAM, a gate driver, and the like are combined).

The control of the LLC converter 10 that is performed by the control unit 20 will be described below.

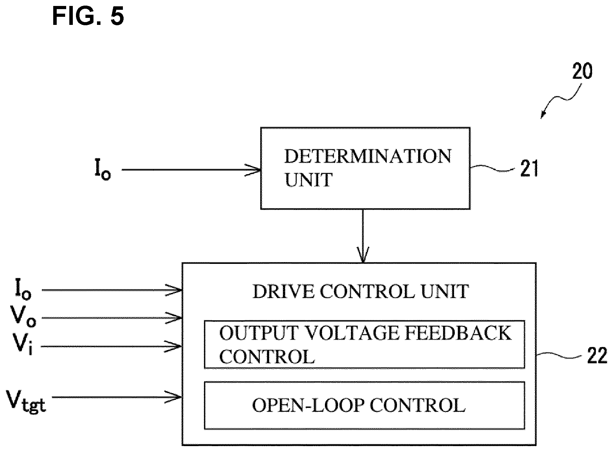

FIG. 5 shows a functional block diagram of the control unit 20. As illustrated, the control unit 20 of the power supply apparatus according to this embodiment is configured (programmed) to operate as a unit provided with a determination unit 21 and a drive control unit 22.

The determination unit 21 is a unit (functional block) that repeats processing for determining whether or not the absolute value of a change amount of the output current $I_o$ per predetermined period of time (hereinafter, referred to as a "change extent of the output current $I_o$") is smaller than or equal to a change extent threshold value that has been set in advance. Note that a period of time equivalent to the switching cycle or a value that is several times the switching cycle, for example, may be used as the predetermined period of time. Also, a value that is about several times a change extent of an output voltage of the LLC converter 10 when no load change has occurred, for example, may be used as the change extent threshold value.

The drive control unit 22 is a unit (functional block) that performs output voltage feedback control if the determination unit 21 determines that the change extent of the output current $I_o$ is smaller than or equal to the change extent threshold value, and otherwise performs open-loop control.

Output voltage feedback control that is performed by the drive control unit 22 is control for adjusting the switching frequency of each of the switching elements based on the output voltage $V_o$ and a change rate of the output current $I_o$ such that the output voltage $V_o$ reaches the target voltage $V_{tgt}$, while driving the switching elements in the signal generation circuit 11 such that a square-waved voltage signal is output. The output voltage feedback control that is performed by the drive control unit 22 according to this embodiment is control for adjusting a switching frequency such that the deviation between "$V_o + k \cdot dI_o/dt$" (where k is a proportionality coefficient) and the target voltage $V_{tgt}$ reaches "0". Note that the output voltage feedback control may also be other control, for example, control for adjusting a switching frequency to only the output voltage $V_o$.

Open-loop control that is performed by the drive control unit 22 is control for driving each switching element in the signal generation circuit 11 at a switching frequency at which the output voltage $V_o$ reaches a target voltage (hereinafter, referred to as a "target frequency") such that a square-waved voltage signal is output from the signal generation circuit 11.

Various processes can be adopted as processing for deriving a target frequency that is performed for this open-loop control.

The deriving processing may be, for example, processing for deriving a target frequency using correspondence relation information (a table in which target frequencies are stored at offset positions corresponding to $I_o$, Vi, and $V_{tgt}$, and the like) that indicates a correspondence relation between a target frequency (a switching frequency at which the output voltage $V_o$ reaches a target voltage) and a combination of the output current $I_o$, the input voltage Vi, and the target voltage $V_{tgt}$. Note that, if the target voltage is fixed, of course, information indicating a correspondence relation between the target frequency and a combination of the output current $I_o$ and the input voltage Vi can be used in place of the correspondence relation information.

In addition, the deriving processing may also be processing for calculating a target frequency f based on Expression 1 below that is an approximate equation of a voltage gain "$V_o/V_i$" of the LLC converter 10.

$$\frac{V_o}{V_i} = \frac{1}{\sqrt{(1 + \frac{1}{S} - \frac{1}{SF^2})^2 + Q^2(F - \frac{1}{F})^2}} \qquad \cdot \cdot \cdot (1)$$

Note that S and F in Expression 1 and the following expressions take the following values.

$$S = \frac{L_m}{L_r} \qquad F = \frac{f}{f_r} \qquad f_r = \frac{1}{2\pi\sqrt{L_r C_r}}$$

Accordingly, S is a value obtained by dividing the excitation inductance $L_m$ by the resonant inductance $L_r$, and F is a value obtained by normalizing the switching frequency f using a resonant frequency $f_r$ determined based on the resonant inductance $L_r$ and the capacity $C_r$ of the resonant capacitor $C_r$. Also, Q in Expression 1 and the expressions described later are values obtained based on a boosting rate N of the transformer 13, the resonant inductance $L_r$, the capacity $C_r$ of the resonant capacitor $C_r$, and a resistance $R_L$ of the load $R_L$ using the following expression.

$$Q = \frac{Z_r}{R_{AC}} \qquad Z_r = \sqrt{\frac{L_r}{C_r}} \qquad R_{AC} = \frac{8}{\pi^2} N^2 R_L$$

In addition, the deriving processing may also be processing for calculating the target frequency f based on Expression 2 below.

$$f = \frac{f_r}{\sqrt{\frac{2 + 2S - (SQ)^2}{2} - \sqrt{\left(\frac{V_i}{V_o}S\right)^2 - (1 + S)^2 + 2(SQ)^2 - (G(V_i)(SQ))^2 + \left(\frac{2 + 2S - (SQ)^2}{2}\right)^2}}} \quad \cdots (2)$$

$$\cdots$$

This Expression 2 is obtained by transforming Expression 1 above.

Specifically, as a result of transforming Expression 1, Expression 3 below is obtained.

$$\left(\frac{V_i}{V_o}\right)^2 = \frac{1}{S^2 F^4} - \frac{1}{F^2}\left(\frac{2}{S^2} + \frac{2}{S} + Q^2\right) + \left(1 + \frac{1}{S}\right)^2 + Q^2 F^2 - 2Q^2 \quad \cdots (3)$$

This Expression 3 is a sixth degree equation of F. Thus, Expression 3 cannot be algebraically solved for F ($=f/f_r$). Note that, if G ($V_i$) is used in place of $F^2$ in "$Q^2 F^2$" in Expression 3, Expression 3 can be transformed into Expression 4 below, in other words, an expression that can be algebraically solved for F.

$$\left(\frac{V_i}{V_o}\right)^2 = \frac{1}{S^2 F^4} - \frac{1}{F^2}\left(\frac{2}{S^2} + \frac{2}{S} + Q^2\right) + \left(1 + \frac{1}{S}\right)^2 + Q^2 G(V_i) - 2Q^2 \quad \cdots (4)$$

If an expression in which this Expression 4 is solved for F is converted into an expression of f, Expression 2 above is obtained. Moreover, G ($V_i$) makes it possible to obtain, in advance, target frequencies in various operation conditions, as a spline function or the like for each target voltage based on a result obtained from Expression 1 and experiment results in various operation conditions. Therefore, processing for calculating the target frequency f based on Expression 2 above can also be adopted as the deriving processing. Note that, when calculating the target frequency f based on Expression 2, it is sufficient to calculate $R_L$ based on the output voltage $V_o$ and the output current $I_o$. In addition, if a target voltage is fixed, it suffices if only a $G(V_i)$ that is appropriate for the target voltage is prepared.

The following supplements the above-described deriving processes.

It is inevitable for the aforementioned correspondence relation information to be large. Thus, when deriving processing for deriving a target frequency using correspondence relation information is adopted, a storage apparatus having a relatively large capacity (usually, a non-volatile storage apparatus such as a flash ROM) needs to be provided in the control unit 20. In addition, Expression 1 is an expression that cannot be algebraically solved for f. Therefore, it is necessary to use iteration for calculating the target frequency f based on Expression 1, but it is required to mount a high-performance CPU in the control unit 20 in order to obtain the target frequency f within a desired period of time using iteration.

On the other hand, if the target frequency f is calculated based on Expression 2, the control unit 20 can be realized without using a large-capacity storage apparatus or a high-performance CPU. Therefore, from such a viewpoint, deriving processing is preferably processing for deriving the target frequency f based on Expression 2.

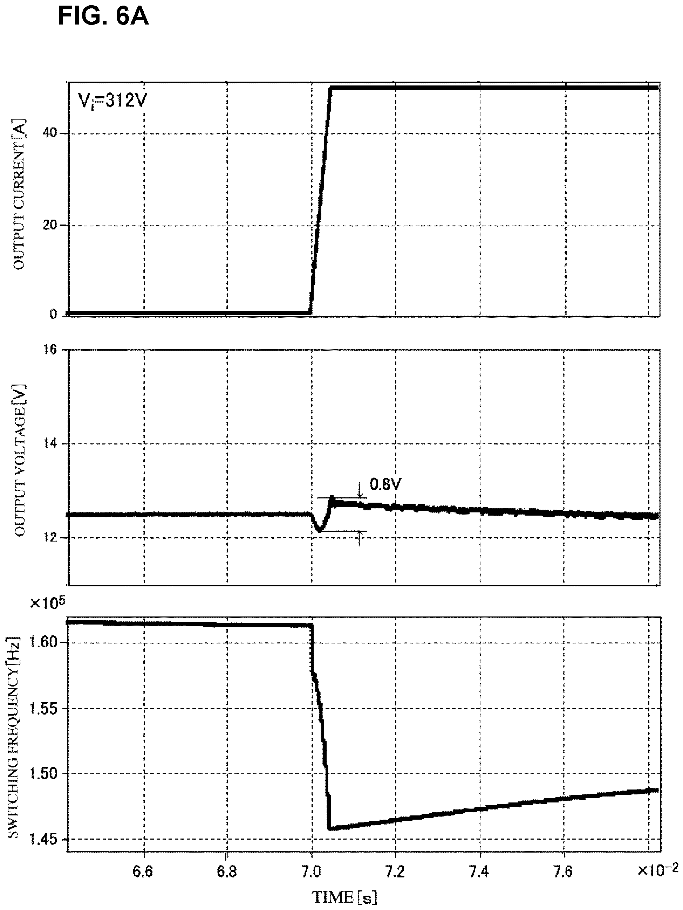

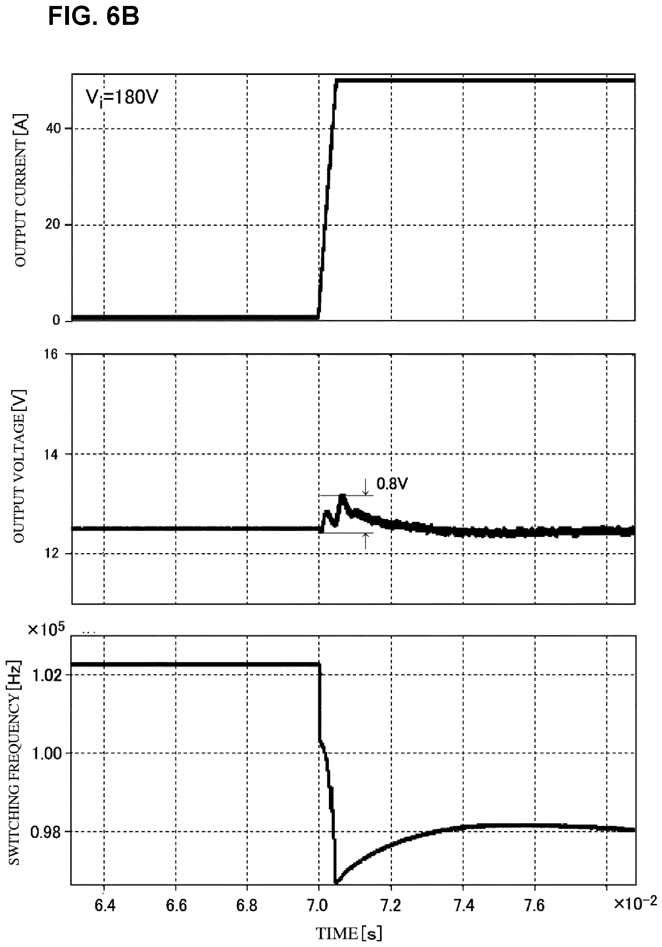

As described above, the control unit 20 of the power supply apparatus according to this embodiment executes open-loop control while a change extent of the output current $I_o$ exceeds the change extent threshold value. Therefore, in the power supply apparatus according to this embodiment, as shown in FIGS. 6A and 6B, when the input voltage Vi is 312 V, and the output current $I_o$ changes from 1 A to 50 A at the speed of 100 A/ms (FIG. 6A) as well, and when the input voltage Vi is 180 V, and the output current $I_o$ changes from 1 A to 50 A at the speed of 100 A/ms (FIG. 6B) as well, a change amount of the output voltage $V_o$ can be a relatively small value. In addition, according to the power supply apparatus in this embodiment, even if another change (a change in a target voltage, output of a load current) occurs in the operation state of the LLC converter, it is possible to suppress occurrence of a large change in an output voltage of the LLC converter.

Modified Examples

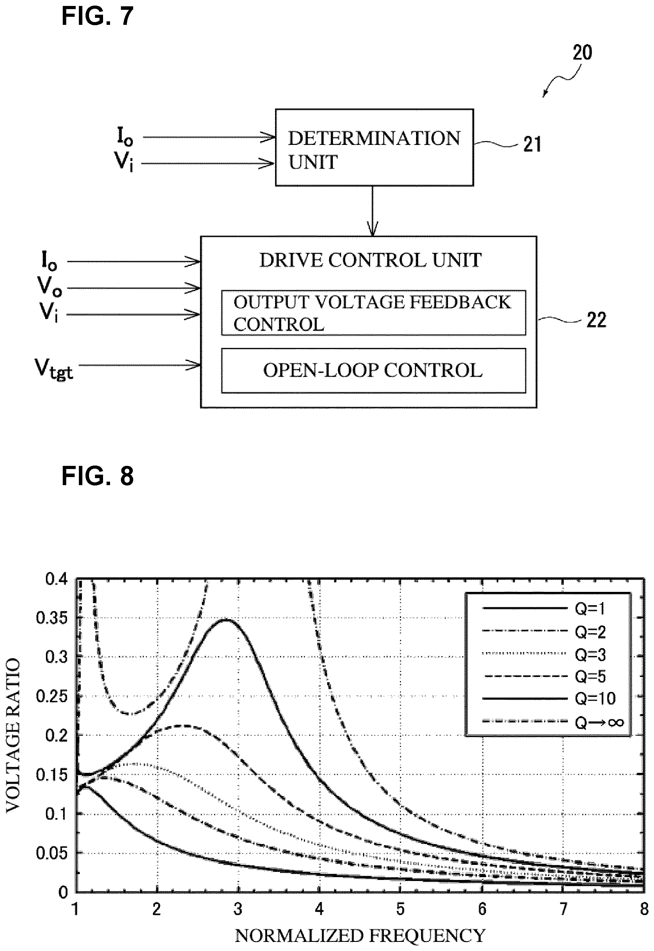

Various modifications can be made in the power supply apparatus according to the above embodiment. The determination unit 21 only needs to be capable of determining whether or not the operation state of the LLC converter 10 is a first state where a change of a predetermined amount or larger (change in the magnitude to be suppressed) can occur in the output voltage $V_o$ when output voltage feedback control is performed, for example. Therefore, the determination unit 21 may be modified into a unit that determines, based on the input voltage Vi, whether or not the operation state of the LLC converter 10 is the first state (for example, a unit that determines whether or not the input voltage Vi is within a voltage range in which a change of a predetermined amount or larger can occur in the output voltage $V_o$ when output voltage feedback control is performed). In addition, the determination unit 21 may also be modified into a unit to which the input voltage Vi and the output current $I_o$ are input as shown in FIG. 7, and that determines whether or not the operation state of the LLC converter 10 is the first state, when the input voltage Vi is out of a voltage range in which a large change does not occur in the output voltage $V_o$ even when output voltage feedback control is performed, and a change extent of the output current Io exceeds the change extent threshold value.

G ($V_i$) may be a function of a physical property value (voltage, current) different from Vi. G ($V_i$) may also be a function of two physical property values.

The determination unit 21 may also be modified into a unit that determines, based on the input voltage Vi, the output current $I_o$, and the target voltage $V_{tgt}$, whether or not the operation state of the LLC converter 10 is a first state where, when output voltage feedback control is executed, a change amount that occurs in an output voltage Vi is larger than that when open-loop control is executed. In addition, the control unit 20 may be modified into a unit that, when the target voltage $V_{tgt}$ is changed, performs open-loop control until a predetermined condition (for example, lapse of a specified time, stabilization of the output voltage $V_o$) is satisfied, and then starts output voltage feedback control. In addition, a value indicative of the input voltage Vi (a physical property value correlated to $V_i$) may be used in place of the input voltage Vi, and a value indicative of the output current $I_o$ may be used in place of the output current $I_o$.

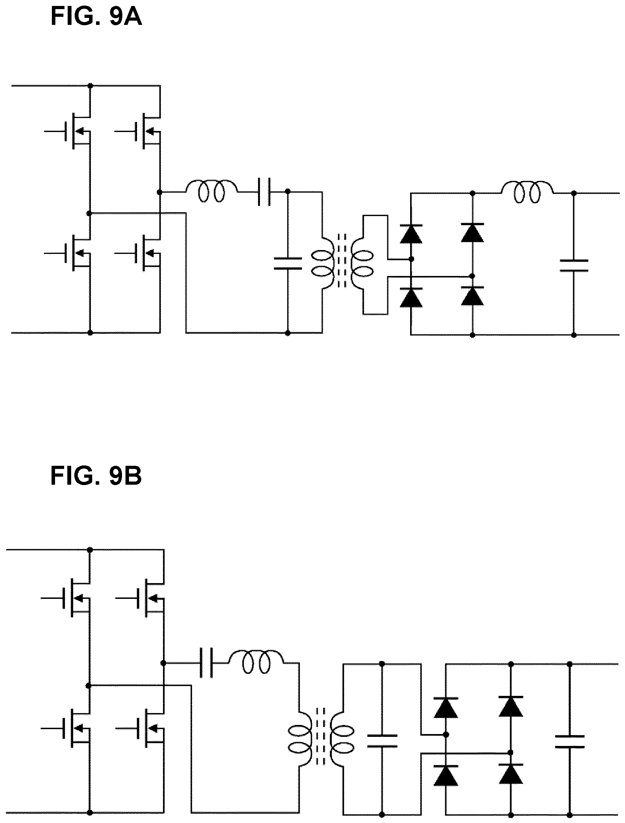

In addition, as shown in FIG. 8, an LCC converter also has a non-linear gain characteristic. Thus, if the LCC converter is controlled through only feedback control, a large output voltage change occurs at the time of a load change (see FIG. 4B). As described above, if the LCC converter is controlled through feedback control and open-loop control, it is possible to prevent a large output voltage change from occurring at the time of a load change. Therefore, the power supply apparatus according to an embodiment of the present invention may be modified into an apparatus provided with an LCC converter, for example, an LCC converter that has a circuit configuration shown in FIG. 9A or 9B, in place of an LLC converter 30.

Configuration requirements of the present invention according to independent claims are described below with reference numerals used in the drawings such that the configuration requirements of the present invention and the configuration of an embodiment can be compared.

LIST OF REFERENCE NUMERALS

10    LLC converter
11    Generation circuit
12    LLC resonant circuit
13    Transformer
14    Rectifier circuit
20    Control unit
21    Determination unit
22    Drive control unit

**Claims**

1. A control apparatus (20) for controlling an LC resonant converter (10) comprising a resonant circuit (12) and a signal generation circuit (11) that includes at least two switching elements, that generates a square-waved voltage signal from an input voltage, and that supplies the voltage signal to the resonant circuit (12), the control apparatus (20) comprising:

   a drive control unit (22) configured to drive the switching elements in the signal generation circuit (11) such that a square-waved voltage signal is output from the signal generation circuit (11), and configured to be capable of executing feedback control for controlling a switching frequency of each of the switching elements in the signal generation circuit (11) using an output voltage of the LC resonant converter (10), such that an output voltage of the LC resonant converter (10) reaches a target voltage, and of executing open-loop control for obtaining a switching frequency at which an output voltage of the LC resonant converter (10) reaches the target voltage, from one or more pieces of information out of the target voltage, an input voltage and an output current of the LC resonant converter (10), and the drive control unit (22) being configured to drive the switching element in the signal generation circuit (11) at the obtained switching frequency; and
   a determination unit (21) configured to determine, based on information regarding an operation state of the LC resonant converter (10), whether or not the operation state of the LC resonant converter (10) is a first state where a change of a predetermined amount or larger may occur in an output voltage if the feedback control is executed,

wherein the drive control unit (22) is configured to execute the feedback control if the determination unit (21) determines that the operation state of the LC resonant converter (10) is not the first state, and the drive control unit (22) is configured execute the open-loop control instead of the feedback control if the determination unit determines that the operation state of the LC resonant converter (10) is the first state.

2. A power supply apparatus comprising:

an LC resonant converter (10) comprising a resonant circuit (12) and a signal generation circuit (11) that includes at least two switching elements, that generates a square-waved voltage signal from an input voltage, and that supplies the voltage signal to the resonant circuit (12); and
the control apparatus (20) according to claim 1.

3. The power supply apparatus according to claim 2,
wherein the determination unit (21) determines whether or not the operation state of the LC resonant converter (10) is the first state, based on whether or not a change amount of a value indicative of an output current of the LC resonant converter (10) per predetermined period of time exceeds a predetermined threshold value.

4. The power supply apparatus according to claim 2,
wherein the determination unit (21) determines whether or not the operation state of the LC resonant converter (10) is the first state, based on a value indicative of an input voltage and a value indicative of an output current of the LC resonant converter (10).

5. The power supply apparatus according to claim 2,
wherein the determination unit (21) determines, based on information regarding the operation state of the LC resonant converter (10), whether or not the operation state of the LC resonant converter (10) is a first state where an amount of a change that occurs in an output voltage when the feedback control is executed is larger than that when the open-loop control is executed.

6. The power supply apparatus according to any one of claims 2 to 5,

wherein the LC resonant converter (10) is an LLC converter, and
the open-loop control that is executed by the drive control unit (22) is control for obtaining a switching frequency f based on the following equation, and driving the switching elements in the signal generation circuit (11) at the obtained switching frequency f:

$$f = \cfrac{f_r}{\sqrt{\dfrac{2 + 2S - (SQ)^2}{2} - \sqrt{\left(\dfrac{V_i}{V_o}S\right)^2 - (1+S)^2 + 2(SQ)^2 - (G \cdot (SQ))^2 + \left(\dfrac{2 + 2S - (SQ)^2}{2}\right)^2}}}$$

$$S = \frac{L_m}{L_r} \qquad Q = \frac{Z_r}{R_{AC}} \qquad Z_r = \sqrt{\frac{L_r}{C_r}} \qquad R_{AC} = \frac{8}{\pi^2} N^2 R_L$$

where Vi is an input voltage of the LLC converter, $V_o$ is the target voltage, $L_m$, $L_r$, and N are respectively an excitation inductance, a leakage inductance, and a transformation ratio of a transformer in the LLC converter, $C_r$ is a capacity of a resonant capacitor of the resonant circuit (12), $f_r$ is a resonant frequency of the resonant circuit, $R_L$ is a resistance of the load obtained based on an output current of the LLC converter and the target voltage, G is a function of at least one physical property value selected from an input voltage and an output current of the LLC converter, values indicative thereof, and the target voltage, the function having been determined in advance as an approximate equation of a " $(f/f_r)^2$ " value.

**7.** The power supply apparatus according to claim 6,
wherein G is a function of the input voltage Vi.

**Patentansprüche**

**1.** Steuervorrichtung (20) zum Steuern eines LC-Resonanzwandlers (10), der einen Schwingkreis (12) und eine Signalerzeugungsschaltung (11) umfasst, die mindestens zwei Schaltelemente aufweist, die ein Rechteckspannungssignal aus einer Eingangsspannung erzeugt und die das Spannungssignal dem Schwingkreis (12) zuführt, wobei die Steuervorrichtung (20) umfasst:

eine Treibersteuereinheit (22), die dazu eingerichtet ist, die Schaltelemente in der Signalerzeugungsschaltung (11) derart anzusteuern, dass ein Rechteckspannungssignal aus der Signalerzeugungsschaltung (11) ausgegeben wird, und die dazu eingerichtet ist, eine Feedback-Regelung zum Regeln einer Schaltfrequenz jedes der Schaltelemente in der Signalerzeugungsschaltung (11) unter Verwendung einer Ausgangsspannung des LC-Resonanzwandlers (10) derart ausführen zu können, dass eine Ausgangsspannung des LC-Resonanzwandlers (10) eine Zielspannung erreicht, und eine rückführungslose Steuerung zum Erlangen einer Schaltfrequenz, bei der eine Ausgangsspannung des LC-Resonanzwandlers (10) die Zielspannung erreicht, anhand eines oder mehrerer Informationselemente aus der Zielspannung, einer Eingangsspannung und einem Ausgangsstrom des LC-Resonanzwandlers (10) auszuführen, und wobei die Treibersteuereinheit (22) dazu eingerichtet ist, das Schaltelement in der Signalerzeugungsschaltung (11) mit der erhaltenen Schaltfrequenz anzusteuern; und eine Bestimmungseinheit (21), die dazu eingerichtet ist, basierend auf Informationen bezüglich eines Betriebszustands des LC-Resonanzwandlers (10) zu bestimmen, ob der Betriebszustand des LC-Resonanzwandlers (10) ein erster Zustand ist, in dem eine Änderung einer vorbestimmten Größe oder größer in einer Ausgangsspannung auftreten kann, wenn die Feedback-Regelung ausgeführt wird, wobei die Treibersteuereinheit (22) dazu eingerichtet ist, die Feedback-Regelung auszuführen, wenn die Bestimmungseinheit (21) bestimmt, dass der Betriebszustand des LC-Resonanzwandlers (10) nicht der erste Zustand ist, und die Treibersteuereinheit (22) dazu eingerichtet ist, die rückführungslose Steuerung anstelle der Feedback-Regelung auszuführen, wenn die Bestimmungseinheit bestimmt, dass der Betriebszustand des LC-Resonanzwandlers (10) der erste Zustand ist.

**2.** Stromversorgungsvorrichtung, umfassend:

einen LC-Resonanzwandler (10), der einen Schwingkreis (12) und eine Signalerzeugungsschaltung (11) umfasst, die mindestens zwei Schaltelemente aufweist, die ein Rechteckspannungssignal aus einer Eingangsspannung erzeugt und die das Spannungssignal dem Schwingkreis (12) zuführt; und
die Steuervorrichtung (20) nach Anspruch 1.

**3.** Stromversorgungsvorrichtung nach Anspruch 2,
wobei die Bestimmungseinheit (21) basierend darauf, ob eine Änderungsgröße eines Werts, der einen Ausgangsstrom des LC-Resonanzwandlers (10) pro vorbestimmter Zeitdauer angibt, einen vorbestimmten Schwellenwert überschreitet, bestimmt, ob der Betriebszustand des LC-Resonanzwandlers (10) der erste Zustand ist oder nicht.

**4.** Stromversorgungsvorrichtung nach Anspruch 2,
wobei die Bestimmungseinheit (21) basierend auf einem Wert, der eine Eingangsspannung angibt, und einem Wert, der einen Ausgangsstrom des LC-Resonanzwandlers (10) angibt, bestimmt, ob der Betriebszustand des LC-Resonanzwandlers (10) der erste Zustand ist oder nicht.

**5.** Stromversorgungsvorrichtung nach Anspruch 2,
wobei die Bestimmungseinheit (21) basierend auf Informationen bezüglich des Betriebszustands des LC-Resonanzwandlers (10) bestimmt, ob der Betriebszustand des LC-Resonanzwandlers (10) ein erster Zustand ist, in dem ein Betrag einer Änderung, die in einer Ausgangsspannung auftritt, wenn die Feedback-Regelung ausgeführt wird, größer ist, als wenn die rückführungslose Steuerung ausgeführt wird.

**6.** Stromversorgungsvorrichtung nach einem der Ansprüche 2 bis 5,

wobei der LC-Resonanzwandler (10) ein LLC-Wandler ist, und
die rückführungslose Steuerung, die durch die Treibersteuereinheit (22) ausgeführt wird, eine Steuerung zum Erlangen einer Schaltfrequenz f basierend auf der folgenden Gleichung und zum Ansteuern der Schaltelemente in der Signalerzeugungsschaltung (11) mit der erhaltenen Schaltfrequenz f ist:

$$f = \frac{f_r}{\sqrt{\frac{2 + 2S - (SQ)^2}{2} - \sqrt{\left(\frac{V_i}{V_o}S\right)^2 - (1 + S)^2 + 2(SQ)^2 - (G \cdot (SQ))^2 + \left(\frac{2 + 2S - (SQ)^2}{2}\right)^2}}}$$

$$S = \frac{L_m}{L_r} \qquad Q = \frac{Z_r}{R_{AC}} \qquad Z_r = \sqrt{\frac{L_r}{C_r}} \qquad R_{AC} = \frac{8}{\pi^2}N^2 R_L$$

wobei Vi eine Eingangsspannung des LLC-Wandlers ist, $V_o$ die Zielspannung ist, $L_m$, $L_r$ und N jeweils eine Erregungsinduktivität, eine Streuinduktivität und ein Übersetzungsverhältnis eines Transformators in dem LLC-Wandler sind, $C_r$ eine Kapazität eines Resonanzkondensators der Resonanzschaltung (12) ist, $f_r$ eine Resonanzfrequenz der Resonanzschaltung ist, $R_L$ ein Widerstand der Last ist, der basierend auf einem Ausgangsstrom des LLC-Wandlers und der Zielspannung erlangt wird, G eine Funktion von mindestens einem physikalischen Eigenschaftswert, der aus einer Eingangsspannung und einem Ausgangsstrom des LLC-Wandlers ausgewählt ist, von Werten, die diese angeben, und von der Zielspannung ist, wobei die Funktion im Voraus als eine Näherungsgleichung eines "$(f/f_r)^2$"-Werts bestimmt wurde.

**7.** Stromversorgungsvorrichtung nach Anspruch 6,
wobei G eine Funktion der Eingangsspannung Vi ist.

## Revendications

**1.** Appareil de commande (20) destiné à commander un convertisseur résonnant LC (10) comprenant un circuit résonnant (12) et un circuit de génération de signal (11) qui comprend au moins deux éléments de commutation, qui génère un signal de tension carré à partir d'une tension d'entrée, et qui applique le signal de tension au circuit résonnant (12), l'appareil de commande (20) comprenant :

une unité de commande de pilotage (22) configurée pour piloter les éléments de commutation du circuit de génération de signal (11) de façon à délivrer un signal de tension carré à partir du circuit de génération de signal (11), et configurée pour pouvoir exécuter une commande de rétroaction de façon à commander une fréquence de commutation de chacun des éléments de commutation du circuit de génération de signal (11) au moyen d'une tension de sortie du convertisseur résonnant LC (10), de sorte qu'une tension de sortie du convertisseur résonnant LC (10) atteigne une tension cible, et exécuter une commande en boucle ouverte de façon à obtenir une fréquence de commutation à laquelle une tension de sortie du convertisseur résonnant LC (10) atteint la tension cible, à partir d'un ou de plusieurs éléments d'informations parmi la tension cible, une tension d'entrée et un courant de sortie du convertisseur résonnant LC (10), et l'unité de commande de pilotage (22) étant configurée pour piloter l'élément de commutation du circuit de génération de signal (11) à la fréquence de commutation obtenue ; et
une unité de détermination (21) configurée pour déterminer, sur la base d'informations concernant un état de fonctionnement du convertisseur résonnant LC (10), si l'état de fonctionnement du convertisseur résonnant LC (10) est, ou non, un premier état dans lequel une variation d'au moins une quantité prédéterminée peut se produire dans une tension de sortie si la commande de rétroaction est exécutée,
dans lequel l'unité de commande de pilotage (22) est configurée pour exécuter la commande de rétroaction si l'unité de détermination (21) détermine que l'état de fonctionnement du convertisseur résonnant LC (10) n'est pas le premier état, et l'unité de commande de pilotage (22) est configurée pour exécuter la commande en boucle ouverte au lieu de la commande de rétroaction si l'unité de détermination détermine que l'état de fonctionnement du convertisseur résonnant LC (10) est le premier état.

**2.** Appareil d'alimentation électrique, comprenant :

un convertisseur résonnant LC (10) comprenant un circuit résonnant (12) et un circuit de génération de signal (11) qui comprend au moins deux éléments de commutation, qui génère un signal de tension carré à partir d'une tension d'entrée, et qui applique le signal de tension au circuit résonnant (12) ; et

l'appareil de commande (20) selon la revendication 1.

3. Appareil d'alimentation électrique selon la revendication 2,
dans lequel l'unité de détermination (21) détermine si l'état de fonctionnement du convertisseur résonnant LC (10) est, ou non, le premier état, sur la base du fait qu'une quantité de variation d'une valeur indiquant un courant de sortie du convertisseur résonnant LC (10) par période de temps prédéterminée dépasse, ou non, une valeur seuil prédéterminée.

4. Appareil d'alimentation électrique selon la revendication 2,
dans lequel l'unité de détermination (21) détermine si l'état de fonctionnement du convertisseur résonnant LC (10) est, ou non, le premier état, sur la base d'une valeur indiquant une tension d'entrée et d'une valeur indiquant un courant de sortie du convertisseur résonnant LC (10).

5. Appareil d'alimentation électrique selon la revendication 2,
dans lequel l'unité de détermination (21) détermine, sur la base d'informations concernant l'état de fonctionnement du convertisseur résonnant LC (10), si l'état de fonctionnement du convertisseur résonnant LC (10) est, ou non, un premier état dans lequel une quantité d'une variation qui se produit dans une tension de sortie lors de l'exécution de la commande de rétroaction est, ou non, supérieure à celle correspondant à l'exécution de la commande en boucle ouverte.

6. Appareil d'alimentation électrique selon l'une quelconque des revendications 2 à 5,

dans lequel le convertisseur résonnant LC (10) est un convertisseur LLC, et
la commande en boucle ouverte qui est exécutée par l'unité de commande de pilotage (22) est une commande destinée à obtenir une fréquence de commutation f sur la base de l'équation suivante, et à piloter les éléments de commutation du circuit de génération de signal (11) à la fréquence de commutation f obtenue :

$$f = \frac{f_r}{\sqrt{\frac{2 + 2S - (SQ)^2}{2} - \sqrt{\left(\frac{V_i}{V_o}S\right)^2 - (1 + S)^2 + 2(SQ)^2 - (G \cdot (SQ))^2 + \left(\frac{2 + 2S - (SQ)^2}{2}\right)^2}}}$$

$$S = \frac{L_m}{L_r} \qquad Q = \frac{Z_r}{R_{AC}} \qquad Z_r = \sqrt{\frac{L_r}{C_r}} \qquad R_{AC} = \frac{8}{\pi^2}N^2R_L$$

dans laquelle Vi est une tension d'entrée du convertisseur LLC, $V_o$ est la tension cible, $L_m$, $L_r$ et N sont respectivement une inductance d'excitation, une inductance de fuite et un taux de transformation d'un transformateur du convertisseur LLC, $C_r$ est une capacité d'un condensateur résonnant du circuit résonnant (12), $f_r$ est une fréquence résonnante du circuit résonnant, $R_L$ est une résistance de la charge obtenue sur la base d'un courant de sortie du convertisseur LLC et de la tension cible, G est une fonction d'au moins une valeur de propriété physique sélectionnée parmi une tension d'entrée et un courant de sortie du convertisseur LLC, leurs valeurs d'indication, et la tension cible, la fonction ayant été déterminée à l'avance en tant qu'équation d'approximation d'une valeur « $(f/f_r)^2$ ».

7. Appareil d'alimentation électrique selon la revendication 6,
dans lequel G est une fonction de la tension d'entrée Vi.

# FIG. 1

## FIG. 2A

## FIG. 2B

FIG. 2C

# FIG. 3

OUTPUT CURRENT: 10 A,
INPUT VOLTAGE: 312 V

OUTPUT CURRENT: 10 A,
INPUT VOLTAGE: 180 V

INPUT VOLTAGE: 312 V

WHEN OUTPUT VOLTAGE CHANGES
FROM 10 A to 50 A,
SWITCHING FREQUENCY CORRECTION
EXTENT IS 22.7 kHz

12.5V

INPUT VOLTAGE: 180 V

WHEN OUTPUT VOLTAGE CHANGES
FROM 10 A to 50 A,
SWITCHING FREQUENCY CORRECTION
EXTENT IS 5 kHz

OUTPUT CURRENT: 50 A,
INPUT VOLTAGE: 312 V

OUTPUT CURRENT: 50 A,
INPUT VOLTAGE: 180 V

OUTPUT VOLTAGE [V]

SWITCHING FREQUENCY [kHz]

EP 3 713 065 B1

## FIG. 4A

## FIG. 4B

# FIG. 5

$I_o$ → DETERMINATION UNIT —21

20

$I_o$ →
$V_o$ →
$V_i$ →

$V_{tgt}$ →

DRIVE CONTROL UNIT

OUTPUT VOLTAGE FEEDBACK CONTROL

OPEN-LOOP CONTROL

—22

## FIG. 6A

## FIG. 6B

## FIG. 7

## FIG. 8

**FIG. 9A**

**FIG. 9B**

**EP 3 713 065 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160352231 A1
- US 20110292688 A1
- US 20140160805 A1
- JP 2003510001 T

**Non-patent literature cited in the description**

- **KATSUYA HIRACHI.** *Circuit Configuration And Operation Principle of LLC-Type DC/DC Converter,* 29 May 2014, http://hirachi.cocolog-nifty.com/kh/files/20140529-3.pdf